# EUROPÄISCHE PATENTSCHRIFT

(11) **EP 4 211 425 B1**
(45) Veröffentlichungstag und Bekanntmachung des Hinweises auf die Patenterteilung: **02.10.2024**
(21) Anmeldenummer: 21769696.2
(22) Anmeldetag: 25.08.2021
(51) Int. Cl.: G01D 11/30, G08B 13/19

(54) **SCHWENKBARE SENSORVORRICHTUNG**
PIVOTAL SENSOR DEVICE
DISPOSITIF CAPTEUR PIVOTANT

(30) Priorität: 09.09.2020 DE 102020123534
(43) Veröffentlichungstag der Anmeldung: 19.07.2023
(73) Patentinhaber: Steinel GmbH, 33442 Herzebrock-Clarholz (DE)
(72) Erfinder: MÖLLER, Thomas, 32049 Herford (DE)
(74) Vertreter: Mathys & Squire
(86) Internationale Anmeldenummer: PCT/EP2021/073549
(87) Internationale Veröffentlichungsnummer: WO 2022/053322

(56) Entgegenhaltungen:
- EP-A2- 1 752 944
- WO-A1-2017/045174
- DE-U1- 29 906 522
- DE-U1- 9 312 065

## Beschreibung

Die vorliegende Erfindung betrifft eine schwenkbare Sensorvorrichtung zum Erfassen von Bewegungen.

Bewegungsmelder, die in der Lage sind, in ihrer Umgebung stattfindende Bewegungen zu detektieren, sind heutzutage verschiedentlich im Einsatz. Je nach Anwendung können hierbei unterschiedliche, an sich bekannte Technologien verwendet werden, wie z.B. die Detektion von Infrarotstrahlen oder Reflexionen von Radarwellen.

Hierbei kann es oft sinnvoll sein, Sensorköpfe der Bewegungsmelder schwenkbar zu gestalten, z.B. um den Sichtbereich des Bewegungsmelders auszurichten oder auch nur um den Sensor von einer für Verpackung und Transport geeigneten Form in eine für die Erfassung von Bewegungen geeignete Form zu bringen. Problematisch kann dabei sein, dass die Anordnung des Sensorkopfes zwar in einer Stellung für den Betrieb optimal ist, in einer anderen jedoch nicht, da er z.B. zu weit in den Raum ragt oder sich nicht formschlüssig in den Rest der Sensorvorrichtung einfügt.

Sensorvorrichtungen mit schwenkbarem Sensorkopf sind aus den Dokumenten EP1752944, DE29906522 und DE9312065 bekannt.

Aufgabe der vorliegenden Erfindung ist es deshalb, eine Sensorvorrichtung mit schwenkbarem Sensorkopf anzugeben, bei der der Sensorkopf in verschiedenen Stellungen relativ zum Rest der Sensorvorrichtung optimal platziert ist.

Diese Aufgabe wird durch den Gegenstand des Anspruchs 1 gelöst.

Hierbei kann eine schwenkbare Sensorvorrichtung einen Körper zum Befestigen der Sensorvorrichtung an einer Wand oder einer Decke, einen Sensorkopf, der derart mit dem Körper verbunden ist, dass er von einer ersten Stellung in eine zweite Stellung geschwenkt werden kann, und einen im Sensorkopf angeordneten Bewegungsdetektor zum Erfassen von Bewegungen in einem Erfassungsbereich des Bewegungsdetektors aufweisen. Hierbei kann der Sensorkopf um eine zu einer Schwenkrichtung senkrecht angeordnete Schwenkachse geschwenkt werden, die den Sensorkopf in Schwenkrichtung versetzt zu seiner Mitte durchläuft.

Die Sensorvorrichtung ist also im Wesentlichen zweiteilig aufgebaut und weist einen Körper oder Hauptteil und die eigentliche Sensorik für die Bewegungserfassung auf. Diese Sensorik ist in einem relativ zum Körper dreh- oder schwenkbaren Element angeordnet, das hier als "Sensorkopf" bezeichnet wird. Aufgrund der relativen Beweglichkeit des Sensorkopfs zum Körper kann die Blickrichtung des Bewegungsdetektors - und damit der Sensorvorrichtung - auch nach der Montage der Sensorvorrichtung an einer Wand oder einer Decke noch verändert werden. Durch die Schwenkbarkeit des Sensorkopfes lässt sich die Sensorvorrichtung also dem gewünschten Einsatzgebiet anpassen.

Insbesondere kann der Sensorkopf zwischen mindestens zwei verschiedenen Stellungen hin und her geschwenkt oder gedreht werden. Eine der beiden Stellungen kann z.B. dazu dienen, den Sensorkopf auf in der Nähe der Sensorvorrichtung stattfindende Bewegungen zu justieren, während die Blickrichtung in der zweiten Stellung auf die Ferne gerichtet ist. Es kann aber auch eine Stellung des Sensorkopfes besser zum Verpacken der Sensorvorrichtung geeignet sein, während die andere für die Detektion von Bewegungen genutzt wird.

Die Schwenk- oder Drehbewegung findet hierbei um eine Schwenkachse statt, die naturgemäß senkrecht zu der Schwenkrichtung steht. Der Sensorkopf weist hierbei eine gewisse, im Prinzip beliebige Ausdehnung entlang der Schwenkrichtung auf, bezüglich derer sich eine Mittelposition definieren lässt. Ist der Sensorkopf z.B. entlang der Schwenkrichtung symmetrisch aufgebaut, entspricht die Symmetrieachse einer Mittellinie. Ist der Sensorkopf im Querschnitt entlang der Schwenkrichtung unsymmetrisch oder unregelmäßig geformt, lässt sich eine Mittellinie z.B. durch die Linie definieren, auf der die Querschnittsfläche in Waage gelagert werden könnte.

Läuft nun die Schwenkachse durch diese gedachte Mittellinie tritt oft das Problem auf, dass der Sensorkopf nur in einer Stellung einen hinsichtlich Kompaktheit und ästhetischer Wirkung befriedigenden Aufbau hat. Insbesondere kann der Sensorkopf in einer (oder mehreren Stellungen) zu weit aus dem Körper herausragen und dadurch zu Durchgangsbehinderungen oder zu Platzverschwendung bei der Lagerung führen. Zudem kann ein unschöner disproportionaler Gesamteindruck der Sensorvorrichtung entstehen.

Um dies zu verhindern, ist in der hier beschriebenen Sensorvorrichtung die Schwenkachse gegenüber der Mittellinie versetzt angeordnet. Der Sensorkopf dreht sich also exzentrisch mit Bezug auf den Körper. Durch den Grad der Exzentrizität und deren Richtung bezüglich der Mittellinie lässt sich bestimmen, um wieviel der Sensorkopf beim Schwenken in eine Richtung senkrecht zur Drehrichtung und zur Schwenkachse versetzt wird. Ist die Schwenkachse z.B. bei im Wesentlichen horizontaler Stellung des Sensorkopfes relativ zur Mittellinie nach oben versetzt, wird der Sensorkopf beim Drehen aus dieser Stellung in eine im Wesentlichen vertikale Stellung stärker nach oben und hinten bewegt, als dies bei einer mittigen Positionierung der Schwenkachse der Fall ist. Der umgekehrte Effekt kann durch Versetzen der Schwenkachse nach unten erreicht werden. Die Relativposition von Mittellinie und Schwenkachse kann hierbei bei der Fertigung fest eingestellt werden. Es ist aber auch denkbar, dass diese Relativposition im Prinzip frei beweglich ist und durch eine Fixierung (z.B. durch Ratschen, durch Einrasten oder durch (Stell-)Schrauben) auf ein festes Verhältnis eingestellt wird.

Auf diese Weise wird ein weiterer Freiheitsgrad für die relative Positionierung in verschiedenen Drehstellungen des Sensorkopfes genutzt. Hierdurch kann der Sensorkopf in verschiedenen, zumindest aber in zwei Stellungen mit Bezug auf den Köper optimal platziert werden, ohne die Funktionalität des Bewegungsdetektors im Sensorkopf zu beeinträchtigen.

Der Sensorkopf kann bei befestigter Sensorvorrichtung in der ersten Stellung nach vorne und in der zweiten Stellung nach unten weisend angeordnet sein und der Sensorkopf kann aufgrund der versetzten Anordnung der Schwenkachse beim Schwenken von der ersten Stellung in die zweite Stellung stärker nach hinten und/oder oben versetzt werden, als bei einer mittigen Anordnung der Schwenkachse. Die erste Stellung dient also dazu, bei befestigter Sensorvorrichtung einen Fernbereich zu überwachen, während in der zweiten Stellung, der unter der Sensorvorrichtung liegende Bereich überwacht wird. In dieser zweiten, nach unten geklappten Stellung ragt der Sensorkopf bei mittiger Anordnung der Schwenkachse vergleichsweise weit in den Raum und kann daher zu Platz- oder Lagerproblemen führen oder wenig ansprechend aussehen. Dies wird durch die versetzte Anordnung der Schwenkachse umgangen.

Der Köper kann ein nach hinten gebogenes Ende aufweisen, in dem die Verbindung zwischen Körper und Sensorkopf angeordnet ist. Durch die zusätzliche Verformung bzw. Verbiegung des Körpers kann ein durch die Exzentrizität der Schwenkbewegung hervorgerufener Effekt noch verstärkt werden. Insbesondere kann durch ein nach hinten, d.h. Richtung Aufhängung der Sensorvorrichtung gezogenes Ende, die Schwenkachse generell näher an der Aufhängungsfläche, d.h. einer Wand oder Decke, positioniert werden, wodurch die Kompaktheit der Sensorvorrichtung für die verschiedenen Stellungen des Sensorkopfes erhöht wird.

Der Körper kann an einem Ende zwei sich entlang der Schwenkachse gegenüberliegende Vorsprünge aufweisen, von denen der Sensorkopf gehalten wird. Aus dem Körper ragen also zwei Laschen oder Arme, an denen der Sensorkopf befestigt ist, z.B. durch Aufstecken auf eine (der virtuellen Schwenkachse entsprechende) Achse oder durch im Sensorkopf oder in den Vorsprüngen ausgebildete Lager. Dadurch ist der Sensorkopf praktisch in dem Körper versenkt bzw. versenkbar angeordnet. Auch dies erhöht die Kompaktheit der Sensorvorrichtung.

Der Sensorkopf kann entlang der Schwenkachse betrachtet bezüglich einer entlang einer Hauptblickrichtung des Bewegungsdetektors verlaufenden Mittellinie einen symmetrischen Querschnitt aufweisen und die Schwenkachse kann den Sensorkopf oberhalb dieser Mittellinie durchlaufen. Der Sensorkopf ist also bezüglich zumindest einer Richtung symmetrisch aufgebaut. Die Richtung der Symmetrieachse entspricht hierbei der Hauptblickrichtung des Bewegungsdetektors, d.h. der Richtung größter Sensitivität des Bewegungsdetektors oder der Richtung der Mittellinie des Erfassungsbereichs oder -kegels des Bewegungsdetektors. Bei befestigter Sensorvorrichtung und waagrecht stehendem Sensorkopf verläuft die Schwenkachse oberhalb dieser Mittellinie, um bei einer Schwenkung nach unten den Sensorkopf stärker nach hinten und/oder oben zu führen, als dies bei einer mittigen Positionierung der Fall wäre. Dadurch kann zum einen die Sensorvorrichtung kompakter ausgestaltet werden. Zum andern kann die Blickrichtung des Bewegungsdetektors aber auch näher an die Aufhängungsfläche gebracht werden, um z.B. Bewegungen direkt unter einer an einer Wand befestigten Sensorvorrichtung verlässlicher detektieren zu können.

Der Bewegungsdetektor kann vorzugsweise ein Infrarotsensor sein, insbesondere ein Passiv-Infrarotsensor. Im Prinzip ist das oben dargestellte Schwenkprinzip aber für jede Art von Bewegungsdetektor anwendbar, dessen Erfassungsbereich durch Schwenken des Bewegungsdetektors eingestellt wird. Zudem kann das Schwenkprinzip auch allein für eine bessere Lager- oder Stapelfähigkeit der Sensorvorrichtung genutzt werden, unabhängig vom verwendeten Bewegungsdetektortyp.

Im Folgenden soll die Erfindung mit Bezug auf die beigefügten Figuren beispielhaft beschrieben werden. Die Beschreibung ist hierbei nicht einschränkend zu verstehen. Die Erfindung ist allein durch den Gegenstand der Ansprüche definiert. Es zeigt:
- **Fig. 1**: eine schematische Darstellung einer schwenkbaren Sensorvorrichtung; und
- **Fig. 2**: eine schematische Darstellung des Querschnitts durch die schwenkbare Sensorvorrichtung der Fig. 1.

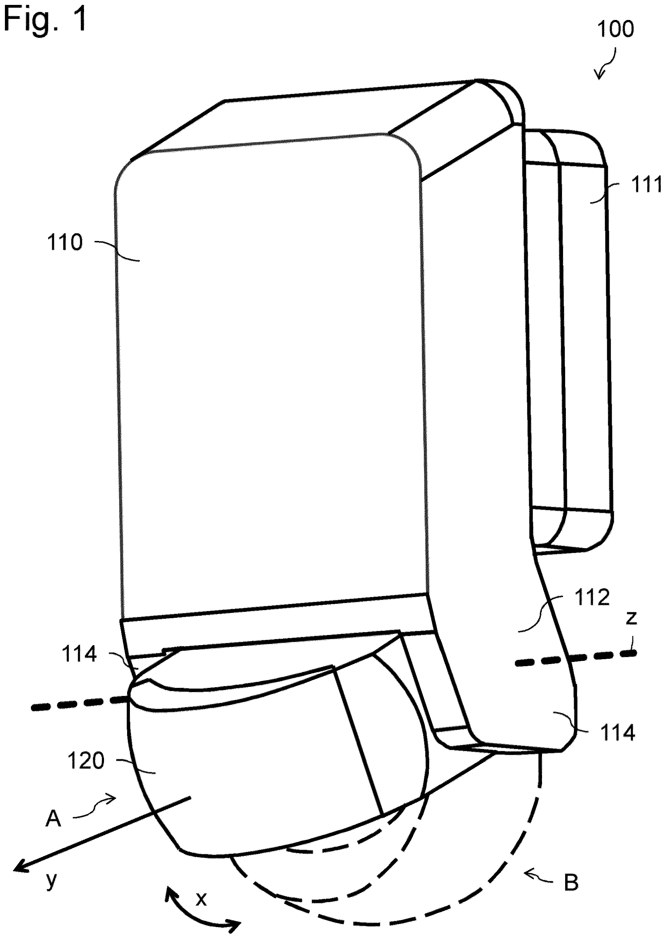

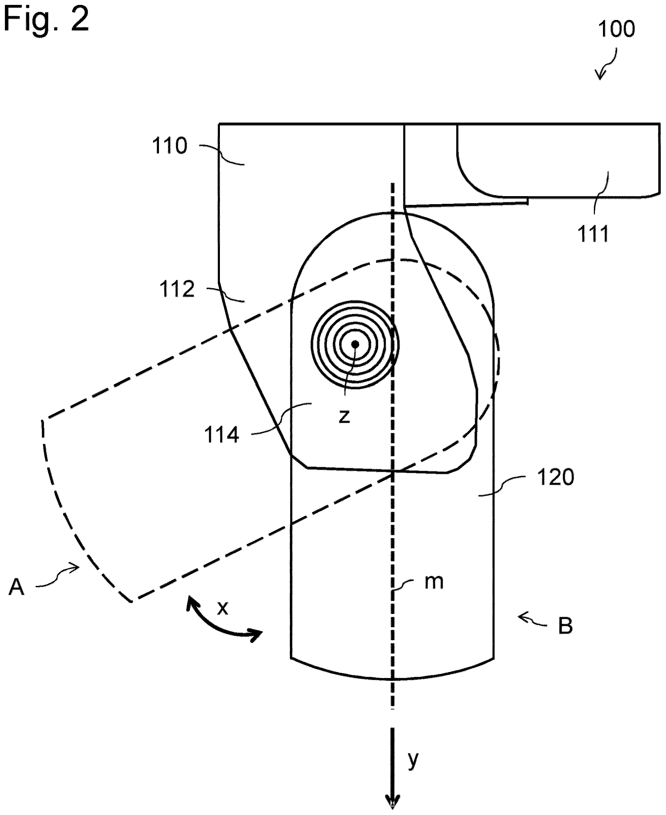

Die Fig. 1 zeigt eine schematische Schrägansicht einer schwenkbaren Sensorvorrichtung 100, die Fig. 2 einen Querschnitt durch die Sensorvorrichtung 100. Es versteht sich, dass die konkrete Ausgestaltung der Sensorvorrichtung 100 hinsichtlich der Abmessungen und der geometrischen Formgebung hierbei rein beispielhaft ist.

Die Sensorvorrichtung 100 weist einen Körper 110 auf, der über eine Befestigungsvorrichtung 111 an einer Wand oder einer Decke befestigt werden kann. In dem in der Fig. 1 dargestellten Beispiel ist die Sensorvorrichtung 100 zur Befestigung an einer Wand geeignet. Der Körper 110 wird von der Befestigungsvorrichtung 111 also in (im Wesentlichen) senkrechter Stellung gehalten. Die Befestigungsvorrichtung 111 kann hierbei beliebig ausgestaltet sein. Zum Beispiel kann die Befestigungsvorrichtung 111 mittels Schrauben an der Wand befestigt werden und der Körper 110 kann auf die Befestigungsvorrichtung 111 aufgesteckt werden. Es sind aber auch andere Befestigungsmöglichkeiten denkbar, die einen sicheren Halt des Körpers 110 an der Wand oder Decke erlauben.

Mit dem Körper 110 ist ein Sensorkopf 120 verbunden, der einen Bewegungsdetektor aufweist, mit dem in einem Erfassungsbereich des Bewegungsdetektors stattfindende Bewegungen erfasst werden können. Im Beispiel der Fig. 1 handelt es sich um einen Infrarotsensor, der Bewegungen in einem Sichtfeld detektieren kann, dass sich um eine Hauptblickrichtung y gruppiert. Es kann aber auch jede andere Art von Bewegungsdetektor mit gerichtetem Erfassungsbereich verwendet werden.

Der Sensorkopf 120 ist gegenüber dem Körper 110 entlang einer Schwenkrichtung x dreh- bzw. schwenkbar. Die Drehung erfolgt hierbei um eine Schwenkachse z. Dadurch kann der Sensorkopf 120 von einer ersten Stellung A in eine zweite (in der Fig. 1 gestrichelt dargestellte) Stellung B gebracht werden. Da sich dadurch auch die Hauptblickrichtung y ändert, kann durch die Drehung der Sichtbereich des Bewegungsdetektors und damit der Erfassungsbereich der Sensorvorrichtung 100 eingestellt werden. Der Sensorkopf 120 kann hierbei nur in der ersten Stellung A und der zweiten Stellung B fixierbar sein. Es kann aber auch möglich sein, den Sensorkopf 120 in verschiedenen Zwischenpositionen zu fixieren. Insbesondere sind auch kontinuierliche Drehungen möglich, bei denen der Sensorkopf 120 aufgrund von Reibungskräften zwischen Körper 110 und Sensorkopf 120 in Position gehalten wird.

Wie in der Fig. 1 gezeigt kann der Sensorkopf 120 in der ersten Stellung A im Wesentlichen nach vorne, d.h. von der Befestigungsfläche abgewandt, ausgerichtet sein. Der Bewegungsdetektor erfasst in dieser Stellung (bei senkrechter Montage) hauptsächlich Bewegungen in einem von der Sensorvorrichtung 100 entfernt liegenden Bereich. In dieser ersten Stellung A ist der Sensorkopf 120 bevorzugt kompakt an den Körper angeschlossen, so dass von der Sensorvorrichtung 100 wenig Raum beansprucht wird.

Wie in der Fig. 1 beispielhaft dargestellt, kann der Körper 110 hierzu an einem Ende 112 an dem der Sensorkopf 120 mit dem Körper 110 verbunden ist, nach hinten springend, d.h. mit einer Biegung in Richtung der Befestigungsvorrichtung 111 ausgestaltet sein. Dadurch ragt der Sensorkopf 120 in der ersten Stellung relativ wenig nach vorne, wie auch im Querschnitt der Fig. 2 zu sehen ist.

Zudem kann, wie ebenfalls beispielhaft in der Fig. 1 gezeigt, der Körper 110 an einem Ende 112 eine Vertiefung aufweisen, durch die zwei Vorsprünge 114 gebildet werden. Der Sensorkopf 120 kann zwischen diesen Vorsprüngen 114 drehbar gelagert befestigt sein, z.B. durch Aufstecken auf eine Achse (die dann gleichlaufend mit der Schwenkachse z ist) oder durch entlang der Schwenkachse z laufende Lager in den Vorsprüngen 114 oder dem Sensorkopf 120. Damit ist der Sensorkopf 120 in der Vertiefung des Körpers 110 versenkt und kann in Richtung der Befestigungsmittel 110 zurückgesetzt werden.

Auf diese Weise wird der Sensorvorrichtung 100 in der ersten Stellung A eine kompakte Form verliehen.

In der zweiten Stellung B blickt der Sensorkopf 120 im Wesentlichen nach unten. Der Erfassungsbereich des Bewegungsdetektors ist also auf einen Nahbereich um die Sensorvorrichtung 100 bzw. auf einen Bereich direkt unter der Sensorvorrichtung 100 gerichtet, z.B. um den Bereich vor einer Tür zu überwachen, um diese bei der Annäherung einer Person zu öffnen, um einen Aufzug zu rufen, um hinter der Tür liegende Räume zu beleuchten oder dergleichen.

Hierbei soll die Hauptblickrichtung y des Bewegungsdetektors zum einen möglichst nah an der Befestigungswand verlaufen. Zum anderen soll die Sensorvorrichtung 100 auch in der zweiten Stellung B kompakt ausgestaltet sein, z.B. auch um sie platzsparend verpacken zu können.

Hierzu ist der Sensorkopf 120 mit Bezug auf die Schwenkachse z exzentrisch angeordnet, wie am Besten im Querschnitt der Fig. 2 zu sehen ist. Die Schwenkachse z durchstößt den Sensorkopf 120 bzw. seinen Querschnitt damit nicht in einer mittigen oder zentralen Position, sondern in Richtung der Schwenkrichtung x seitlich versetzt. Dadurch ist es möglich, den Sensorkopf 120 im Vergleich zu einer mittigen Positionierung bei der Drehung stärker in eine bestimmte Richtung zu versetzen.

Zum Beispiel ist in der in den Fig. 1 und 2 gezeigten Ausgestaltung der Sensorvorrichtung 100 die Schwenkachse z gegenüber der Mitte des Sensorkopfes 120 nach oben versetzt angeordnet. Das heißt eine Mittellinie m durch den Querschnitt des Sensorkopfes 120 verläuft bei waagrechter Stellung des Sensorkopfes 120 unterhalb davon, bei senkrechter Stellung rechts davon, wie in der Fig. 2 gezeigt. Dadurch wird der Sensorkopf 120 beim Schwenken von der ersten Stellung A in die zweite Stellung B näher an die Befestigungsmittel 111, d.h. weiter nach oben und hinten, gezogen, als es bei einer mittigen Positionierung bezüglich der Schwenkachse z der Fall wäre. Auf diese Weise bleibt die Sensorvorrichtung 100 auch in der zweiten Stellung B kompakt. Zudem wird die Hauptblickrichtung y nahe an die Befestigungswand gerückt.

In den Fig. 1 und 2 hat der Sensorkopf 120 einen symmetrischen Aufbau, so dass die entlang der Hauptblickrichtung y verlaufende Mittellinie m die Symmetrieachse des in der Fig. 2 gezeigten Querschnitts des Sensorkopfes 120 ist. Es versteht sich von selbst, dass dies rein beispielhaft ist und dass der Sensorkopf 120 jede beliebige Form aufweisen kann, die eine Drehung relativ zum Körper 110 erlaubt. In gleichem Maße ist die Lagerung zwischen den nach hinten gebogenen Vorsprüngen 114 des Körpers 112 als beispielhaft anzusehen.

Auch ist es nicht zwingend notwendig, den Sensorkopf 120 derart mit dem Körper 110 zu verbinden, dass die Schwenkachse z oberhalb der Mittellinie m liegt. Falls dies für eine vorteilhafte Anordnung von Sensorkopf 120 und Körper 110 in zwei (oder mehr) verschiedenen Stellungen vorteilhaft ist, kann die Schwenkachse z auch auf der anderen Seite der Mittellinie liegen. Ausschlaggebend ist hierbei, dass durch den Versatz von der Mittenposition gleichsam ein weiterer Freiheitsgrad für die relative Positionierung von Sensorkopf 120 und Körper 110 erschlossen wird.

Dieser Freiheitsgrad kann insbesondere dann voll genutzt werden, wenn der Versatz zwischen Schwenkachse z und Mittellinie m auch in der fertig montierten Sensorvorrichtung 100 noch verändert werden kann, z.B. durch eine Schiene für die Veränderung des Versatzes, z.B. durch die Veränderung der Ansatzpunkte der den Sensorkopf 120 am Körper 110 haltenden Lager. Der Sensorkopf 120 kann dann bezüglich der Schwenkachse z beliebig versetzt werden, bis eine gewünschte Position gefunden ist. Eine Fixierung kann dann z.B. durch Feststellschrauben, Einrasten oder dergleichen erfolgen.

Auf die oben beschriebenen Weisen kann damit eine Sensorvorrichtung 100 mit schwenkbarem Sensorkopf 120 realisiert werden, bei der der Sensorkopf 120 in verschiedenen Stellungen optimal relativ zum Rest der Sensorvorrichtung 100 platziert werden kann.

## Patentansprüche

1. Schwenkbare Sensorvorrichtung (100) mit
einem Körper (110) zum Befestigen der Sensorvorrichtung (100) an einer Wand oder einer Decke;
einem Sensorkopf (120), der derart mit dem Körper (110) verbunden ist, dass er von einer ersten Stellung (A) in eine zweite Stellung (B) geschwenkt werden kann; und
einem in dem Sensorkopf (120) angeordneten Bewegungsdetektor zum Erfassen von Bewegungen in einem Erfassungsbereich des Bewegungsdetektors; wobei
der Sensorkopf (120) um eine zu einer Schwenkrichtung (x) senkrecht angeordnete Schwenkachse (z) exzentrisch geschwenkt werden kann, die den Sensorkopf (120) in Schwenkrichtung (x) exzentrisch versetzt durchläuft,
**dadurch gekennzeichnet, dass**
der Sensorkopf (120) entlang der Schwenkachse (z) betrachtet bezüglich einer entlang einer Hauptblickrichtung (y) des Bewegungsdetektors verlaufenden Mittellinie (m) einen symmetrischen Querschnitt hat; und
die Schwenkachse (z) den Sensorkopf (120) bei waagrechter Stellung der Hauptblickrichtung (y) oberhalb dieser Mittellinie (m) durchläuft.

2. Schwenkbare Sensorvorrichtung (100) nach Anspruch 1, wobei
der Sensorkopf (120) bei befestigter Sensorvorrichtung (100) in der ersten Stellung (A) eine im Wesentlichen waagrechte Hauptblickrichtung (y) des Bewegungsdetektors und in der zweiten Stellung (B) eine im Wesentlichen vertikale Hauptblickrichtung (y) aufweist; und
der Sensorkopf (120) aufgrund der versetzten Anordnung der Schwenkachse (z) beim Schwenken von der ersten Stellung (A) in die zweite Stellung (B) stärker entgegen der Hauptblickrichtung (y) in der ersten Stellung (A) und/oder entgegen der Hauptblickrichtung (y) in der zweiten Stellung (B) versetzt wird, als bei einer Anordnung der Schwenkachse (z) auf der Mittellinie (m).

3. Schwenkbare Sensorvorrichtung (100) nach einem der vorherigen Ansprüche, wobei
der Köper (110) ein Ende (112) aufweist, in dem die Verbindung zwischen Körper (110) und Sensorkopf (120) angeordnet ist; und
das Ende (112) in eine Richtung gebogen ist, die entgegen einer im Wesentlichen waagrechten Hauptblickrichtung (y) des Bewegungsdetektors läuft.

4. Schwenkbare Sensorvorrichtung (100) nach einem der vorherigen Ansprüche, wobei
der Körper (110) an einem Ende (112) zwei sich entlang der Schwenkachse gegenüberliegende Vorsprünge (114) aufweist, von denen der Sensorkopf (120) gehalten wird.

5. Schwenkbare Sensorvorrichtung nach einem der vorherigen Ansprüche, wobei
der Bewegungsdetektor ein Infrarotsensor ist.

## Claims

1. Pivotable sensor device (100) having
a body (110) for fastening the sensor device (100) to a wall or a ceiling;
a sensor head (120) which is connected to the body (110) such that it can be pivoted from a first position (A) into a second position (B); and
a movement detector arranged in the sensor head (120) for detecting movements in a detection range of the movement detector; wherein
the sensor head (120) can be pivoted eccentrically about a pivot axis (z) that is arranged perpendicularly to a pivot direction (x) and that passes through the sensor head (120) eccentrically offset in the pivot direction (x),
**characterised in that**
the sensor head (120), viewed along the pivot axis (z), has a symmetrical cross-section with respect to a centre line (m) that extends along a main viewing direction (y) of the movement detector; and
the pivot axis (z) passes through the sensor head (120) in the horizontal position of the main viewing direction (y) above said centre line (m).

2. Pivotable sensor device (100) according to claim 1, wherein
the sensor head (120), when the sensor device (100) is fastened, has a substantially horizontal main viewing direction (y) of the movement detector in the first position (A) and a substantially vertical main viewing direction (y) in the second position (B); and
the sensor head (120), during pivoting from the first position (A) into the second position (B), is offset more strongly counter to the main viewing direction (y) in the first position (A) and/or counter to the main viewing direction (y) in the second position (B) due to the offset arrangement of the pivot axis (z) than when the pivot axis (z) is arranged on the centre line (m).

3. Pivotable sensor device (100) according to any of the preceding claims, wherein
the body (110) comprises an end (112) in which the connection between the body (110) and sensor head (120) is arranged; and
the end (112) is curved in a direction which runs counter to a substantially horizontal main viewing direction (y) of the movement detector.

4. Pivotable sensor device (100) according to any of the preceding claims, wherein
the body (110) comprises, at one end (112), two projections (114) which are opposite one another along the pivot axis and by which the sensor head (120) is held.

5. Pivotable sensor device according to any of the preceding claims, wherein
the movement detector is an infrared sensor.

## Revendications

1. Dispositif de détection pivotant (100) comprenant
un corps (110) permettant de fixer le dispositif de détection (100) à un mur ou à un plafond ;
une tête de détection (120) reliée au corps (110) de manière à pouvoir pivoter d'une première position (A) à une deuxième position (B) ; et
un détecteur de mouvement disposé dans la tête de détection (120) permettant de détecter des mouvements dans une zone de détection du détecteur de mouvement ; dans lequel
la tête de détection (120) peut être pivotée de manière excentrée autour d'un axe de pivotement (z) disposé perpendiculairement à une direction de pivotement (x) qui traverse la tête de détection (120) de manière excentrée dans la direction de pivotement (x),
**caractérisé en ce que**
la tête de détection (120), vue le long de l'axe de pivotement (z), a une section transversale symétrique par rapport à une ligne médiane (m) s'étendant le long d'une direction de vision principale (y) du détecteur de mouvement ; et
l'axe de pivotement (z) traverse la tête de détection (120) au-dessus de cette ligne médiane (m) lorsque la direction de vision principale (y) est horizontale.

2. Dispositif de détection pivotant (100) selon la revendication 1, dans lequel
la tête de détection (120) présente, lorsque le dispositif de détection (100) est fixé, une direction de vision principale (y) du détecteur de mouvement sensiblement horizontale dans la première position (A) et une direction de vision principale (y) sensiblement verticale dans la deuxième position (B) ; et
en raison de la disposition décalée de l'axe de pivotement (z), la tête de détection (120) est davantage décalée, lors du pivotement de la première position (A) vers la deuxième position (B), dans le sens opposé à la direction de vision principale (y) dans la première position (A) et/ou dans le sens opposé à la direction de vision principale (y) dans la deuxième position (B), que lorsque l'axe de pivotement (z) est disposé sur la ligne médiane (m).

3. Dispositif de détection pivotant (100) selon l'une quelconque des revendications précédentes, dans lequel
le corps (110) présente une extrémité (112) dans laquelle est disposée la liaison entre le corps (110) et la tête de détection (120) ; et
l'extrémité (112) est courbée dans une direction opposée à une direction de vision principale (y) sensiblement horizontale du détecteur de mouvement.

4. Dispositif de détection pivotant (100) selon l'une quelconque des revendications précédentes, dans lequel
le corps (110) présente à une extrémité (112) deux protubérances (114) opposées le long de l'axe de pivotement, par lesquelles la tête de détection (120) est maintenue.

5. Dispositif de détection pivotant selon l'une quelconque des revendications précédentes, dans lequel
le détecteur de mouvement est un détecteur thermique à l'infrarouge.
